# EUROPEAN PATENT APPLICATION

(11) **EP 4 369 460 A1**
(43) Date of publication of application: **15.05.2024**
(21) Application number: 22881354.9
(22) Date of filing: 12.10.2022
(51) Int. Cl.: H01M 10/058, H01M 10/0565, H01M 10/052

(54) **METHOD OF PREPARING GEL POLYMER ELECTROLYTE SECONDARY BATTERY AND GEL POLYMER ELECTROLYTE SECONDARY BATTERY PREPARED THEREFROM**

(30) Priority: 12.10.2021 KR 20210135234
(71) Applicant: LG Energy Solution, Ltd., Seoul 07335 (KR)
(72) Inventor: YOON, Yeo-Min, Daejeon 34122 (KR); KIM, Dong-Kyu, Daejeon 34122 (KR); RYU, Ji-Hoon, Daejeon 34122 (KR); LIM, Tae-Seob, Daejeon 34122 (KR)
(74) Representative: Hoffmann Eitle
(86) International application number: PCT/KR2022/015437
(87) International publication number: WO 2023/063727

(57) **Abstract**

Disclosed is a method for manufacturing a secondary battery in which the inner part of a battery is uniformly wetted with a liquid electrolyte, and then the electrolyte is gelled. Therefore, it is possible to obtain a secondary battery having a uniform distribution of the gel polymer electrolyte in the battery through uniform wetting with the gel polymer electrolyte. In addition, as compared to a battery using a liquid electrolyte, the gel polymer electrolyte secondary battery obtained by the method for manufacturing a secondary battery according to the present disclosure causes no leakage of the electrolyte, has excellent heat resistance and safety and high durability, and shows uniform electrochemical properties throughout the whole battery through the uniform distribution of the electrolyte inside of the battery.

## Description

### TECHNICAL FIELD

The present application claims priority to Korean Patent Application No. 10-2021-0135234 filed on October 12, 2021 in the Republic of Korea. The present disclosure relates to a method for manufacturing a lithium secondary battery including a gel polymer electrolyte and a gel polymer electrolyte secondary battery obtained thereby.

### BACKGROUND ART

Recently, an energy storage technology has been given an increasing attention. Efforts into research and development for electrochemical devices have been actualized more and more, as the application of energy storage technology has been extended to energy for cellular phones, camcorders and notebook PCs and even to energy for electric vehicles. In this context, electrochemical devices have been most spotlighted. Among such electrochemical devices, rechargeable secondary batteries have been focused.

Among the commercially available secondary batteries, lithium secondary batteries developed in the early 1990's have been spotlighted, since they have a higher operating voltage and significantly higher energy density as compared to conventional batteries, such as Ni-Mn, Ni-Cd and sulfuric acid-lead batteries using an aqueous electrolyte.

Such lithium secondary batteries may be classified into lithium-ion batteries using a liquid electrolyte and lithium polymer batteries using a polymer electrolyte, depending on the electrolyte used specially therefor.

Lithium-ion batteries have an advantage of high capacity, but have a risk of electrolyte leakage and explosion due to the use of a lithium salt-containing liquid electrolyte. Therefore, lithium-ion batteries are disadvantageous in that they require a complicated battery design in order to provide against such a disadvantage.

On the other hand, lithium polymer batteries use a solid polymer electrolyte or an electrolyte-containing gel polymer electrolyte, and thus show improved safety and may have flexibility. Therefore, lithium polymer batteries may be developed into various types, such as compact batteries or thin film-type batteries. The gel polymer electrolyte may be classified into a coating-type gel polymer electrolyte and an injection-type gel polymer electrolyte, depending on the process for preparing the same. The inj ection-type gel polymer electrolyte may be prepared by injecting a liquid electrolyte including a crosslinkable monomer to a cell, wetting an electrode assembly with the liquid electrolyte, and carrying out a crosslinking process. During the crosslinking, the electrolyte forms a matrix and is converted into a gel-like electrolyte having no flowability.

Meanwhile, it is required to carry out the crosslinking process, after the liquid electrolyte is injected and then the inner part of the battery is sufficiently wetted with the electrolyte. This is because when the electrolyte is gelled before a uniform wetting state is accomplished, the gel polymer electrolyte may be distributed non-uniformly inside of the battery. When manufacturing a liquid electrolyte battery, an aging process in which the electrolyte is injected to a battery and the battery is allowed to stand under a vacuum condition for a predetermined time is carried out so that the inner part of the battery may be uniformly wetted with the electrolyte. However, when using such a vacuum aging process in the manufacture of a gel polymer electrolyte battery, crosslinking is initiated due to a low concentration of oxygen. Therefore, the electrolyte may be gelled before a uniform wetting state is accomplished. Accordingly, application of the aging process is limited, thereby making it difficult to ensure the same level of wettability as a liquid electrolyte battery. As a result, there is a need for developing a process for manufacturing a gel polymer electrolyte battery which ensures uniform wettability of the battery with a gel polymer electrolyte.

### DISCLOSURE

### Technical Problem

The present disclosure is designed to solve the problems of the related art, and therefore the present disclosure is directed to providing an effective method for manufacturing a secondary battery including a gel polymer electrolyte and having a uniform distribution of the gel polymer electrolyte in the battery through uniform wetting with the gel polymer electrolyte. In addition, the present disclosure is directed to providing a secondary battery having a uniform distribution of a gel polymer electrolyte therein. It will be easily understood that the objects and advantages of the present disclosure may be realized by the means shown in the appended claims and combinations thereof.

### Technical Solution

According to the first embodiment of the present disclosure, there is provided a method for manufacturing a secondary battery, including the steps of:
(S 1) introducing an electrode assembly, and a first electrolyte containing an organic solvent and a polymerizable compound to a battery casing to obtain a preliminary battery;
(S2) allowing the preliminary battery to stand for a predetermined time;
(S3) injecting a second electrolyte containing an organic solvent and a crosslinking agent to the preliminary battery; and
(S4) allowing the resultant product of step (S3) to stand at a temperature of 50-80°C for predetermined time, wherein the first electrolyte is free from a crosslinking agent.

According to the second embodiment of the present disclosure, there is provided the method for manufacturing a secondary battery as defined in the first embodiment, wherein the polymerizable compound includes at least one selected from the group consisting of a polymerizable monomer, oligomer and copolymer.

According to the third embodiment of the present disclosure, there is provided the method for manufacturing a secondary battery as defined in the first or the second embodiment, wherein the first electrolyte, the second electrolyte or both further include a lithium salt.

According to the fourth embodiment of the present disclosure, there is provided the method for manufacturing a secondary battery as defined in any one of the first to the third embodiments, wherein the second electrolyte further includes a polymerizable compound.

According to the fifth embodiment of the present disclosure, there is provided the method for manufacturing a secondary battery as defined in any one of the first to the fourth embodiments, wherein step (S2) is carried out at room temperature.

According to the sixth embodiment of the present disclosure, there is provided the method for manufacturing a secondary battery as defined in any one of the first to the fifth embodiments, wherein step (S3) is carried out at a battery internal temperature of room temperature or ranging from room temperature to 100°C.

According to the seventh embodiment of the present disclosure, there is provided the method for manufacturing a secondary battery as defined in any one of the first to the sixth embodiments, wherein step (S3) is carried out under a vacuum condition or under a reduced pressure condition.

According to the eighth embodiment of the present disclosure, there is provided the method for manufacturing a secondary battery as defined in any one of the first to the seventh embodiments, wherein the crosslinking agent is either an azo-based compound, a peroxide-based compound, a redox-based compound or a combination of two or more thereof.

According to the ninth embodiment of the present disclosure, there is provided a method for manufacturing a secondary battery, including the steps of:
(S 1) introducing an electrode assembly, and a first electrolyte containing an organic solvent and a polymerizable compound to a battery casing to obtain a preliminary battery;
(S2) allowing the preliminary battery to stand for a predetermined time;
(S3) injecting a second electrolyte containing an organic solvent and a crosslinking agent to the preliminary battery; and
(S4) allowing the resultant product of step (S3) to stand at a temperature of 50-80°C for predetermined time,

According to the tenth embodiment of the present disclosure, there is provided the method for manufacturing a secondary battery as defined in the ninth embodiment, wherein the first electrolyte, the second electrolyte or both of them includes a lithium salt.

### Advantageous Effects

In the method for manufacturing a secondary battery according to the present disclosure, the inner part of a battery is uniformly wetted with a liquid electrolyte, and then the electrolyte is gelled. Therefore, it is possible to obtain a secondary battery having a uniform distribution of the gel polymer electrolyte in the battery through uniform wetting with the gel polymer electrolyte. In addition, as compared to a battery using a liquid electrolyte, the gel polymer electrolyte secondary battery obtained by the method for manufacturing a secondary battery according to the present disclosure causes no leakage of the electrolyte, has excellent heat resistance and safety and high durability, and shows uniform electrochemical properties throughout the whole battery through the uniform distribution of the electrolyte inside of the battery.

### DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing. Meanwhile, shapes, sizes, scales or proportions of some constitutional elements in the drawings may be exaggerated for the purpose of clearer description.

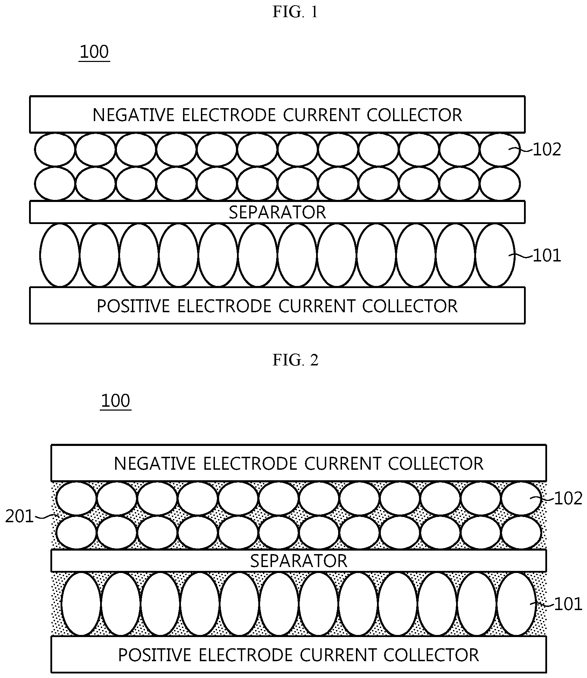

FIGS. 1-4 are schematic views each illustrating behavior of infiltration and diffusion of the first electrolyte and the second electrolyte into the electrode assembly in the method for manufacturing a battery according to an embodiment of the present disclosure.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation. Therefore, the description proposed herein is just a preferable example for the purpose of illustrations only, not intended to limit the scope of the disclosure, so it should be understood that other equivalents and modifications could be made thereto without departing from the scope of the disclosure.

Throughout the specification, the expression 'a part includes an element' does not preclude the presence of any additional elements but means that the part may further include the other elements.

As used herein, the terms 'about', 'substantially', or the like, are used as meaning contiguous from or to the stated numerical value, when an acceptable preparation and material error unique to the stated meaning is suggested, and are used for the purpose of preventing an unconscientious invader from unduly using the stated disclosure including an accurate or absolute numerical value provided to help understanding of the present disclosure.

As used herein, the expression 'A and/or B' means 'A, B or both of them'.

Specific terms used in the following description are for illustrative purposes and are not limiting. Such terms as 'right', 'left', 'top surface' and `bottom surface' show the directions in the drawings to which they are referred. Such terms as 'inwardly' and 'outwardly' show the direction toward the geometrical center of the corresponding apparatus, system and members thereof and the direction away from the same, respectively. 'Front', 'rear', 'top' and 'bottom' and related words and expressions show the positions and points in the drawings to which they are referred and should not be limiting. Such terms include the above-listed words, derivatives thereof and words having similar meanings.

The present disclosure relates to a secondary battery including a gel polymer electrolyte and a method for manufacturing the secondary battery.

### Secondary Battery

The secondary battery according to an embodiment of the present disclosure includes an electrode assembly including at least one negative electrode, at least one separator and at least one positive electrode, independently, wherein the negative electrode, the separator and the positive electrode are stacked successively in such a manner that the negative electrode and the positive electrode are electrically insulated from each other by the separator. In addition, the secondary battery includes an electrolyte with which the electrode assembly is wetted. According to an embodiment of the present disclosure, the electrolyte is a gel polymer electrolyte formed through the crosslinking of a polymerizable compound.

According to the present disclosure, the positive electrode may include a positive electrode current collector, and a positive electrode active material layer formed on one surface or both surfaces of the positive electrode current collector. The positive electrode active material layer includes a positive electrode mixture, which may include a positive electrode active material, a binder and a conductive material. Herein, the positive electrode mixture does not include an electrolyte with which the positive electrode is wetted. According to the present disclosure, the positive electrode active material layer includes a plurality of pores and has porous properties, wherein the pores are filled with the electrolyte as described hereinafter.

The positive electrode current collector is not particularly limited, as long as it causes no chemical change in the corresponding battery and has conductivity. Particular examples of the positive electrode current collector may include stainless steel, aluminum, nickel, titanium, baked carbon, aluminum or stainless steel surface-treated with carbon, nickel, titanium or silver, or the like.

The positive electrode active material is a compound capable of reversible lithium intercalation/deintercalation, and particular examples thereof include lithium metal composite oxides containing at least one metal, such as cobalt, manganese, nickel or aluminum, and lithium. More particularly, the lithium metal composite oxides may include lithium-manganese oxides (e.g. LiMnO₂, LiMn₂O₄, etc.), lithium-cobalt oxides (e.g., LiCoO₂, etc.), lithium-nickel oxides (e.g., LiNiO₂, etc.), lithium-nickel-manganese oxides (e.g., LiNi_{1-Y}Mn_{Y}O₂ (wherein 0 < Y < 1), LiMn_{2-z}Ni_{z}O₄ (wherein 0 < Z < 2)), lithium-nickel-cobalt oxides (e.g., LiNi_{1-Y1}Co_{Y1}O₂ (wherein 0 < Y1 < 1)), lithium-manganese-cobalt oxides (e.g., LiCo_{1-Y2}Mn_{Y2}O₂ (wherein 0 < Y2 < 1), LiMn_{2-z1}Co_{z1}O₄ (wherein 0 < Z1 < 2)), lithium-nickel-manganese-cobalt oxides (e.g., Li(NiₚCo_{q}Mnᵣ₁)O₂ (0 < p < 1, 0 < q < 1, 0 < r1 < 1, p + q + r1 = 1) or Li(Niₚ₁Co_{q1}Mnᵣ₂)O₄ (0 < p1 < 2, 0 < q1 < 2, 0 < r2 < 2, p1 + q1 + r2 = 2)), lithium-nickel-cobalt-transition metal (M) oxides (e.g., Li(Niₚ₂Co_{q2}Mnᵣ₃MS₂)O₂ (wherein M is selected from the group consisting of Al, Fe, V, Cr, Ti, Ta, Mg and Mo, and each of p2, q2, r3 and s2 represents the atomic proportion of each element satisfying 0 < p2 < 1, 0 < q2 < 1, 0 < r3 < 1, 0 < s2 < 1, and p2 + q2 + r3 + s2 = 1)), or the like, and any one compound, or two or more compounds of them may be used. According to an embodiment of the present disclosure, particular examples of the positive electrode active material may include LiNi_{1/3}Co_{1/3}Mn_{1/3}O₂, LiCoO₂, LiMnO₂, LiNiO₂, lithium nickel manganese cobalt oxides (e.g. Li(Ni_{1/3}Mn_{1/3}Co_{1/3})O₂, Li(Ni_{0.6}Mn_{0.2}Co_{0.2})O₂, Li(Ni_{0.5}Mn_{0.3}Co_{0.2})O₂, Li(Ni_{0.7}Mn_{0.15}Co_{0.15})O₂, Li(Ni_{0.8}Mn_{0.1}Co_{0.1})O₂, or the like), or lithium nickel cobalt aluminum oxides (e.g., Li(Ni_{0.8}Co_{0.15}Al_{0.05})O₂, or the like).

The positive electrode active material may be used in an amount of 50-99 wt% based on the total weight of the solid content in the positive electrode mixture.

The binder is an ingredient which assists binding between the active material and the conductive material and binding to the current collector. In general, the binder may be added in an amount of 1~30 wt% based on the total weight of the solid content in the positive electrode mixture. Particular examples of the binder include a vinylidene fluoride-based polymer, such as polyvinylidene fluoride (PVDF), containing vinylidene fluoride as a polymerization unit, polyvinyl alcohol, carboxymethyl cellulose (CMC), starch, hydroxypropyl cellulose, regenerated cellulose, polyvinyl pyrrolidone, polytetrafluoroethylene, polyethylene, polypropylene, ethylene-propylene-diene monomer (EPDM), sulfonated EPDM, styrene-butadiene rubber, fluoro-rubber, various copolymers, or the like.

The conductive material may be added in an amount of 1-30 wt% based on the total weight of the solid content in the positive electrode mixture.

Such a conductive material is not particularly limited, as long as it causes no chemical change in the corresponding battery and has conductivity. Particular examples of the conductive material include: carbon powder, such as carbon black, acetylene black (or denka black), ketjen black, channel black, furnace black, lamp black or thermal black; graphite powder, such as natural graphite, artificial graphite or graphite having a well-developed crystal structure; conductive fibers, such as carbon fibers or metallic fibers; carbon fluoride; metal powder, such as, aluminum or nickel powder; conductive whisker, such as zinc oxide or potassium titanate; conductive metal oxide, such as titanium oxide; and conductive materials, such as polyphenylene derivatives.

According to the present disclosure, the negative electrode may include a negative electrode current collector, and a negative electrode active material layer formed on one surface or both surfaces of the negative electrode current collector. The negative electrode active material layer includes a negative electrode mixture, which may include a negative electrode active material, a binder and a conductive material. Herein, the negative electrode mixture does not include an electrolyte with which the negative electrode is wetted. According to the present disclosure, the negative electrode active material layer includes a plurality of pores and has porous properties, wherein the pores are filled with the electrolyte as described hereinafter.

The negative electrode current collector generally has a thickness of 3-500 µm. The negative electrode current collector is not particularly limited, as long as it has high conductivity, while not causing any chemical change in the corresponding battery. Particular examples of the negative electrode current collector include copper, stainless steel, aluminum, nickel, titanium, baked carbon, or copper or stainless steel surface-treated with carbon, nickel, titanium, silver, etc., aluminum-cadmium alloy, or the like. In addition, similarly to the positive electrode current collector, the negative electrode current collector may have fine surface irregularities formed on the surface thereof to increase the adhesion of a negative electrode active material, and may have various shapes, such as a film, a sheet, a foil, a net, a porous body, a foam or non-woven web body.

In addition, the negative electrode active material may include a carbonaceous material capable of reversible lithium-ion intercalation/deintercalation, metal or alloy of metal with lithium, metal composite oxide, material capable of lithium doping/dedoping, a transition metal oxide or a combination of two or more thereof.

The carbonaceous material capable of reversible lithium-ion intercalation/deintercalation may include any carbonaceous negative electrode active material used currently in a lithium-ion secondary battery with no particular limitation. Typical examples of the carbonaceous material include crystalline carbon, amorphous carbon or a combination thereof. Particular examples of the crystalline carbon include graphite, such as amorphous, sheet-like, flake-like, spherical or fibrous natural graphite or artificial graphite, and particular examples of the amorphous carbon include soft carbon (low-temperature baked carbon) or hard carbon, mesophase pitch carbide, baked cokes, or the like.

The metal composite oxide that may be used is selected from the group consisting of PbO, PbO₂, Pb₂O₃, Pb₃O₄, Sb₂O₃, Sb₂O₄, Sb₂O₅, GeO, GeO₂, Bi₂O₃, Bi₂O₄, Bi₂O₅, LiₓFe₂O₃ (0 ≤ x≤ 1), LiₓWO₂ (0 ≤ x ≤ 1), and SnₓMe₁₋ₓMe'_{y}O_{z} (wherein Me is Mn, Fe, Pb, or Ge; Me' is Al, B, P, Si, element of Group 1, 2 or 3 in the Periodic Table, or halogen; and 0 < x ≤ 1; 1 ≤ y ≤ 3; and 1 ≤ z ≤ 8).

The material capable of lithium doping/dedoping may include Si, SiOₓ (0 < x ≤ 2), Si-Y alloy (wherein Y is an element selected from the group consisting of alkali metals, alkaline earth metals, Group 13 elements, Group 14 elements, transition metals, rare earth metal elements and combinations thereof, except Si), Sn, SnO₂, Sn-Y (wherein Y is an element selected from the group consisting of alkali metals, alkaline earth metals, Group 13 elements, Group 14 elements, transition metals, rare earth metal elements and combinations thereof, except Sn), or the like. At least one of such materials may be used in combination with SiO₂. Element Y may be selected from the group consisting of Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Ti, Ge, P, As, Sb, Bi, S, Se, Te, Po, and a combination thereof.

The transition metal oxide may include lithium-containing titanium composite oxide (LTO), vanadium oxide, lithium vanadium oxide, or the like.

The negative electrode active material may be used in an amount of 50-99 wt%, based on the total weight of the solid content in the negative electrode mixture.

The binder is an ingredient which assists binding among the conductive material, the active material and the current collector, and is not limited to any specific ingredient, as long as it may be used as a binder for a negative electrode for a secondary battery. In general, the binder may be added in an amount of 1-30 wt%, based on the total weight of the solid content in the negative electrode mixture. Particular examples of the binder include a vinylidene fluoride-based polymer, such as polyvinylidene fluoride (PVDF), containing vinylidene fluoride as a polymerization unit, polyvinyl alcohol, carboxymethyl cellulose (CMC), starch, hydroxypropyl cellulose, regenerated cellulose, polyvinyl pyrrolidone, polytetrafluoroethylene, polyethylene, polypropylene, ethylene-propylene-diene monomer (EPDM), sulfonated EPDM, styrene-butadiene rubber, fluoro-rubber, various copolymers thereof, or the like.

The conductive material is an ingredient for further improving the conductivity of the negative electrode active material, and may be added in an amount of 1-20 wt%, based on the total weight of the solid content of the negative electrode mixture. The conductive material may be the same or different as the conductive material used for manufacturing the positive electrode. Particular examples of the conductive material include: carbon powder, such as carbon black, acetylene black (or denka black), ketjen black, channel black, furnace black, lamp black or thermal black; graphite powder, such as natural graphite, artificial graphite or graphite having a well-developed crystal structure; conductive fibers, such as carbon fibers or metallic fibers; carbon fluoride; metal powder, such as, aluminum or nickel powder; conductive whisker, such as zinc oxide or potassium titanate; conductive metal oxide, such as titanium oxide; and conductive materials, such as polyphenylene derivatives.

The separator functions to interrupt an internal short-circuit between the positive electrode and the negative electrode, to provide an ion channel between the positive electrode and the negative electrode, and to allow the retention of an electrolyte.

According to an embodiment of the present disclosure, the separator may be prepared by mixing a polymer resin, a filler, such as inorganic particles, and a solvent to form a separator composition and coating the separator composition directly on the top of an electrode, followed by drying, to form a separator film. In a variant, the separator may be prepared by casting the separator composition on a support, followed by drying, and laminating the separator film separated from the support on the top of an electrode.

Meanwhile, according to another embodiment of the present disclosure, the separator may include a conventional porous polymer film used as a separator for an electrochemical device including a secondary battery, for example, a porous polymer film made of a polyolefin-based polymer, including ethylene homopolymer, propylene homopolymer, ethylene/butene copolymer, ethylene/hexene copolymer or ethylene/methacrylate copolymer, and such porous polymer films may be used alone or in the form of a laminate. Otherwise, a conventional porous non-woven web, such as a non-woven web made of high-melting point glass fibers, polyethylene terephthalate fibers, or the like, may be used with no particular limitation.

Herein, the porous separator may generally have a pore diameter of 0.01-50 µm and a porosity of 5vol%-95vol%. In addition, the porous separator may generally have a thickness of 5-300 µm. According to the present disclosure, the separator includes a plurality of pores and has porous properties, wherein the pores are filled with the electrolyte as described above.

Meanwhile, according to the present disclosure, the separator may be the polymer film as described above, or a non-woven web made of a polymeric material and having a heat resistant layer on at least one surface thereof. The heat resistant layer includes inorganic particles and a polymer resin, wherein the weight ratio of the inorganic particles to the polymer resin may be about 50:50-99: 1. Preferably, the heat resistant layer may have a structure formed by the interstitial volume among the adjacent inorganic particles.

Meanwhile, according to the present disclosure, the electrode assembly may be prepared by stacking the negative electrode, the positive electrode and the separator in such a manner that the separator may be interposed between the positive electrode and the negative electrode, and applying an adequate level of pressure and/or heat (carrying out a lamination process) so that interfacial binding may be accomplished. The lamination process may be carried out under the conventional processing conditions generally known to those skilled in the art.

Meanwhile, there is no particular limitation in the material or shape of the battery casing. For example, the battery casing may have a cylindrical shape using a can or a prismatic shape. In a variant, the battery casing may have a pouch-like shape using a pouch film or a coin-like shape.

Meanwhile, according to the present disclosure, the secondary battery includes a gel polymer electrolyte. The gel polymer electrolyte according to the present disclosure has a gel-like shape formed through the crosslinking of a polymerizable compound with an organic solvent, as described below in detail with reference to a method for manufacturing a secondary battery.

### Method for Manufacturing Secondary Battery

Hereinafter, the method for manufacturing a secondary battery according to an embodiment of the present disclosure will be explained.

According to an embodiment of the present disclosure, the method for manufacturing a secondary battery includes the steps of:
(S1) introducing an electrode assembly, and a first electrolyte containing an organic solvent and a polymerizable compound to a battery casing to obtain a preliminary battery;
(S2) allowing the preliminary battery to stand for a predetermined time;
(S3) injecting a second electrolyte containing an organic solvent and a crosslinking agent to the preliminary battery; and
(S4) allowing the resultant product of step (S3) to stand at a temperature of 50-80°C for predetermined time.

Particularly, in the method for manufacturing a battery according to the present disclosure, the first electrolyte is free from a crosslinking agent. That is the first electrolyte does not include a crosslinking agent.

Herein, the term `preliminary battery' is used in order to differentiate it from a finished product and refers to an intermediate product during the manufacturing process.

First, an electrode assembly and a first electrolyte are prepared, and are received in a battery casing (S 1).

The electrode assembly is the same as described with reference to the secondary battery according to the present disclosure. Therefore, for convenience of explanation, description of the electrode assembly is abbreviated. According to an embodiment of the present disclosure, the electrode assembly may be prepared in a jelly-roll shape through winding, or in a stacked or stacked-folded shape, depending on the particular purpose of use or application of the battery. This step may be carried out by introducing the electrode assembly into a battery casing, and then injecting the first electrolyte, but is not particularly limited thereto.

According to an embodiment of the present disclosure, the first electrolyte may include an organic solvent and a polymerizable compound. In addition, the first electrolyte may further include a lithium salt. Meanwhile, the present disclosure is characterized in that the first electrolyte is free from a crosslinking agent.

According to an embodiment of the present disclosure, the amount of the organic solvent introduced through the first electrolyte may be 30-80 wt% based on the total introduction of the organic solvent. The first electrolyte functions as a medium by which the polymerizable compound is diffused homogeneously in the electrode assembly along the organic solvent. Therefore, the organic solvent may be introduced in an adequate amount in order to diffuse the polymerizable compound into the electrode assembly.

The organic solvent is not particularly limited, as long as it minimizes decomposition caused by oxidation during the charge/discharge cycles of a secondary battery and can realize desired properties in combination with additives. For example, carbonate-based organic solvents, ether-based organic solvents and ester-based organic solvents may be used alone or in combination.

Among such organic solvents, the carbonate-based organic solvents may include cyclic carbonate-based organic solvents, linear carbonate-based organic solvents or both of them. Particular examples of the cyclic carbonate-based organic solvent may include ethylene carbonate (EC), propylene carbonate (PC), 1,2-butylene carbonate, 2,3-butylene carbonate, 1,2-pentylene carbonate, 2,3-pentylene carbonate, vinylene carbonate, vinylethylene carbonate, fluoroethylene carbonate (FEC) or a combination of two or more thereof. Particularly, the cyclic carbonate-based organic solvent may include a mixed solvent of ethylene carbonate having a high dielectric constant with propylene carbonate having a relatively lower melting point as compared to ethylene carbonate.

In addition, the linear carbonate-based organic solvent is an organic solvent having low viscosity and a low dielectric constant, and typical examples thereof may include dimethyl carbonate (DMC), diethyl carbonate (DEC), dipropyl carbonate, ethyl methyl carbonate (EMC), methyl propyl carbonate, ethyl propyl carbonate or a combination of two or more thereof. Particularly, the linear carbonate-based organic solvent may include dimethyl carbonate.

The ether-based organic solvent may include any one selected from dimethyl ether, diethyl ether, dipropyl ether, methyl ethyl ether, methyl propyl ether, or ethyl propyl ether or a mixture of two or more of thereof. However, the scope of the present disclosure is not limited thereto.

The ester-based organic solvent may include at least one selected from linear ester-based organic solvents or cyclic ester-based organic solvents or a combination of two or more thereof.

Particular examples of the linear ester-based organic solvent may include any one organic solvent selected from methyl acetate, ethyl acetate, propyl acetate, methyl propionate, ethyl propionate, propyl propionate or butyl propionate, or a mixture of two or more thereof. However, the scope of the present disclosure is not limited thereto.

Particular examples of the cyclic ester-based organic solvent may include any one organic solvent selected from γ-butyrolactone, γ-valerolactone, γ-caprolactone, σ-valerolactone or ε-caprolactone, or a mixture of two or more thereof. However, the scope of the present disclosure is not limited thereto.

Among such ester-based solvents, the cyclic carbonate-based compound is a high-viscosity organic solvent and can dissociate the lithium salt in the electrolyte well, and thus may be used preferably. When using such a cyclic carbonate-based compound in the form of a mixture with a low-viscosity and low-dielectric linear carbonate-based compound and linear ester-based compound at a suitable mixing ratio, it is possible to prepare a gel polymer electrolyte having high electrical conductivity preferably.

The polymerizable compound, i.e. polymerizable monomer, oligomer or copolymer, is a compound which has a polymerizable functional group selected from the group consisting of vinyl, epoxy, allyl and (meth)acryl groups and capable of undergoing polymerization in its structure, and can be converted into a gel phase through polymerization or crosslinking. The polymerizable compound is not particularly limited, as long as it is used conventionally as a monomer, oligomer or copolymer for preparing a gel polymer electrolyte.

Particularly, non-limiting examples of the polymerizable monomer include, but are not limited to: tetraethylene glycoldiacrylate, polyethylene glycol diacrylate (molecular weight 50-20,000), 1,4-butanediol diacrylate, 1,6-hexandiol diacrylate, trimethylolpropane triacrylate, trimethylolpropane ethoxylate triacrylate, trimethylolpropane propoxylate triacrylate, ditrimethylolpropane tetraacrylate, pentaerythritol tetraacrylate, pentaerythritol ethoxylate tetraacrylate, dipentaerythritol pentaacrylate, dipentaerythritol hexaacrylate, poly(ethylene glycol) diglycidylether, 1,5-hexadiene diepoxide, glycerol propoxylate triglycidyl ether, vinylcyclohexene dioxide, 1,2,7,8-diepoxyoctane, 4-vinylcyclohexene dioxide, butyl glycidyl ether, diglycidyl 1,2-cyclohexanedicarboxylate, ethylene glycol diglycidyl ether, glycerol triglycidyl ether, glycidyl methacrylate, or the like. Such compounds may be used alone or in combination.

In addition, typical examples of the copolymer include allyl 1,1,2,2-tetrafluoroethyl ether (TFE)-co-(2,2,2-trifluoroethyl acrylate), TFE-co-vinyl acetate, TFE-co-(2-vinyl-1,3-dioxolane), TFE-co-vinyl methacrylate, TFE-co-acrylonitrile, TFE-co-vinyl acrylate, TFE-co-methyl acrylate, TFE-co-methyl methacrylate (MMA) or TFE-co-2,2,2-trifluoroethyl acrylate (FA) or a combination of two or more thereof.

The polymerizable compound may be used in an amount of 0.01-20 wt% based on the total weight of the first electrolyte. When the content of the polymerizable compound is larger than 20 wt%, gelling may occur excessively in the step described hereinafter, or the composition may become excessively dense to provide a gel having high resistance. On the contrary, when the content of the polymerizable compound is smaller than 0.01 wt%, it is not possible to realize the effect of the gel polymer electrolyte. Meanwhile, according to an embodiment of the present disclosure, the polymerizable compound may be controlled preferably so that it may be introduced in an amount of 0.5-10 wt% based on the total weight of the electrolyte introduced to the battery.

The lithium salt is used as an electrolyte salt in the lithium secondary battery and as a medium for transporting ions. In general, the lithium salt includes Li⁺, as a cation, and at least one selected from F⁻, Cl⁻, Br⁻, I⁻, NO₃⁻, N(CN)₂⁻, BF₄⁻, ClO₄⁻, AlO₄⁻, AlCl₄⁻, PF₆⁻, SbF₆⁻, AsF₆⁻, B₁₀Cl₁₀⁻, BF₂C₂O₄⁻, BC₄O₈⁻, (CF₃)₂PF₄⁻, (CF₃)₃PF₃⁻, (CF₃)₄PF₂⁻, (CF₃)₅PF⁻, (CF₃)₆P⁻, CF₃SO₃⁻, C₄F₉SO₃⁻, CF₃CF₂SO₃⁻, (CF₃SO₂)₂N⁻, (FSO₂)₂N⁻, CF₃CF₂(CF₃)₂CO⁻, (CF₃SO₂)₂CH⁻, CF₃(CF₂)₇SO₃⁻, CF₃CO₂⁻, CH₃CO₂⁻, SCN⁻ or (CF₃CF₂SO₂)₂N⁻, or a combination of two or more, as an anion.

Such lithium salts may be used alone or in combination. The lithium salt may be used in an amount controlled suitably within a generally applicable range. However, the lithium salt may be used at a concentration of 0.5-2 M, particularly 0.9-1.5 M, in the electrolyte in order to obtain an optimized effect of forming a coating film for preventing corrosion on the electrode surface. Since the composition for a gel polymer electrolyte according to the present disclosure includes an electrolyte salt at 0.5 M or more, it is possible to reduce the resistance caused by depletion of lithium ions during high-rate charge/discharge. Furthermore, when the concentration of the electrolyte salt in the composition for a gel polymer electrolyte according to the present disclosure satisfies the above-defined range, it is possible to ensure high lithium cation (Li⁺) ion transportability (i.e. cation transference number) by virtue of an increase in lithium cations present in the composition for a gel polymer electrolyte, and to accomplish an effect of reducing diffusion resistance of lithium ions, thereby realizing an effect of improving cycle capacity characteristics.

The lithium salt may be included totally in the first electrolyte, included in division in the first electrolyte and the second electrolyte, or included totally in the second electrolyte. When the lithium salt is included in division in the first electrolyte and the second electrolyte, the ratio of division is not limited to any particular range.

The preliminary battery may be provided to the next step by sealing the casing after the electrode assembly and the first electrolyte are received therein.

Next, an aging step of allowing the preliminary battery obtained from step (S1) to stand for a predetermined time is carried out (S2). Since the first electrolyte injected in step (S1) is free from a crosslinking agent, the polymerizable compound is not subjected to crosslinking but is retained in a non-crosslinked state. Therefore, infiltration and diffusion of the first electrolyte to the preliminary battery, particularly, into the electrode assembly is carried out, and thus the electrode assembly is wetted with the first electrolyte. In order to allow the electrode assembly to be wetted more uniformly and homogeneously with the electrolyte, the aging step may be carried out under a vacuum state. For example, the aging step may be carried out by allowing the battery to stand under a vacuum condition and ambient pressure condition alternately.

Particularly, after carrying out the aging step by allowing the battery to stand under an ambient pressure condition, the battery casing may be opened partially to carry out at least one step selected from vacuum treatment, pressurization and degassing steps. The vacuum wetting step may be carried out under a reduced pressure condition of -70 kPa to - 99 kPa. Meanwhile, the battery may be pressurized after the electrolyte injection to accelerate the wetting of the inner part of the electrode assembly with the electrolyte. Herein, the pressurization may be carried out under a pressure larger than 0 kPa and equal to or less than 190 kPa. In addition, the vacuum wetting step may be carried out within several minutes, particularly twice or more times. According to an embodiment of the present disclosure, after forming a vacuum atmosphere under a reduced pressure condition of about -95 kPa, the vacuum wetting may be carried out eight times for 1-5 minutes. In addition, the electrolyte may be transported sufficiently even to the fine pores in the electrode or the separator by the vacuum treatment, and thus it is possible to provide an effect of providing the electrode assembly with improved wettability.

The aging step may be carried out within several hours to several days, but is not limited thereto. For example, the aging step may be carried out within 72 hours. According to the present disclosure, the aging step may be carried out preferably at room temperature with a view to acceleration of wetting. Meanwhile, step (S2) may be carried out at room temperature. Herein, the term `room temperature' may refer to 18-28°C.

FIG. 1 is a schematic sectional view illustrating an electrode assembly 100 including a negative electrode and a position electrode stacked with a separator interposed therebetween. Referring to FIG. 1, the positive electrode includes a positive electrode active material 101, and the negative electrode includes a negative electrode active material 102. Meanwhile, such materials as a conductive material or a binder, other than the electrode active materials, are not shown in the drawing, but are included in the electrodes as described above. Once the first electrolyte 201 is injected to the prepared electrode assembly, the vacant space of the electrode assembly is wetted with the electrolyte, and the wetting may be accelerated by the above-mentioned aging step. FIG. 2 is a schematic view illustrating the battery whose inner part is wetted with the first electrolyte 201 after the first electrolyte 201 is injected.

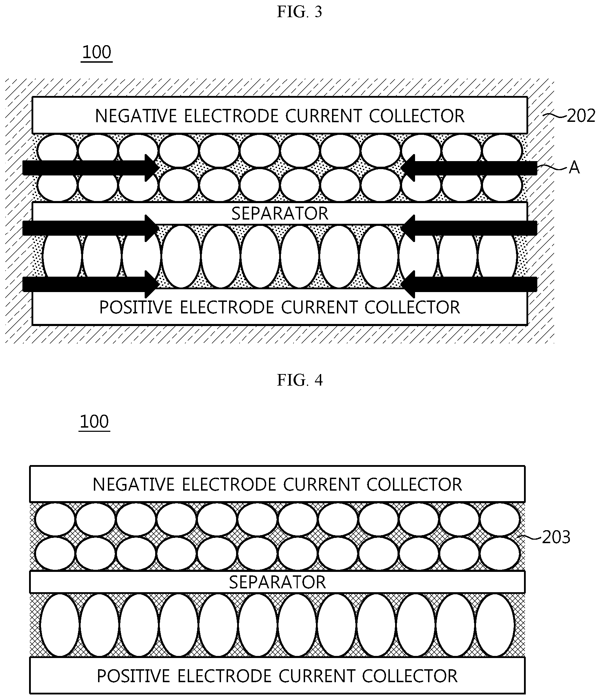

Then, the second electrolyte 202 is injected (S3), after carrying out the aging step of (S2). The second electrolyte may include an organic solvent and a crosslinking agent. Since the polymerizable compound and the lithium salt have already been introduced through the injection of the first electrolyte, the second electrolyte may not include a polymerizable compound or a lithium salt, or if any, such an ingredient may be included in a small amount. Therefore, the second electrolyte has a lower concentration or viscosity as compared to the first electrolyte. In addition, the electrode assembly has already been wetted with the first electrolyte in the preceding step. As a result, when the second electrolyte 202 is injected, it is rapidly infiltrated into the electrode assembly through the liquid-liquid diffusion. FIG. 3 is a schematic view illustrating behavior of liquid-liquid diffusion of the second electrolyte containing an initiator. The arrow mark, A, in FIG. 3 represents the direction of infiltration of the second electrolyte into the electrode assembly 100 through the liquid-liquid diffusion.

The amount of the organic solvent introduced through the second electrolyte may be controlled suitably within a range of 20-70 wt% based on the total weight of the organic solvent introduced to the electrode assembly.

According to an embodiment of the present disclosure, in step (S3), the battery may have an internal temperature of room temperature or an internal temperature ranging from room temperature to 100°C. In general, since the electrolyte and the electrode assembly are stored at room temperature, the internal temperature of the battery may be room temperature. According to an embodiment of the present disclosure, in order to accelerate the diffusion of the electrolyte into the battery, the electrolyte may be warmed and injected. Meanwhile, according to an embodiment of the present disclosure, the electrolyte may be injected under a vacuum condition or reduced pressure condition, in step (S3). For example, the electrolyte may be injected under the condition of a pressure of -70 kPa to -99 kPa. Meanwhile, the battery may be pressurized after the injection of the electrolyte to accelerate the wetting of the inner part of the electrode assembly with the electrolyte. Herein, the pressurization may be carried out under a pressure larger than 0 kPa and equal to or less than 190 kPa.

The crosslinking agent may include a conventional thermal polymerization initiator or photopolymerization initiator known to those skilled in the art. For example, the polymerization initiator may be decomposed by heat to form radicals and react with the polymerizable compound through free radical polymerization to form a gel polymer electrolyte.

More particularly, non-limiting examples of the polymerization initiator include, but are not limited to: organic peroxides or hydroperoxides, such as benzoyl peroxide, acetyl peroxide, dilauryl peroxide, di-tert-butylperoxide, t-butyl peroxy-2-ethyl-hexanoate, cumyl hydroperoxide and hydrogen peroxide, at least one azo compound selected from the group consisting of 2,2'-azobis(2-cyanobutane), 2,2'-azobis(methylbutyronitrile), 2,2'-azobis(isobutyronitrile) (AIBN) and 2,2'-azobisdimethyl valeronitrile (AMVN), or the like.

The polymerization initiator is decomposed by heat (e.g. heat of 30-100°C) or at room temperature (5-30°C) in a battery to form radicals, and a polymerizable oligomer reacts with an acrylate compound through free radical polymerization to form a gel polymer electrolyte.

The crosslinking agent may be used in an amount of 0.01-20 parts by weight, particularly 0.1-10 parts by weight, based on 100 parts by weight of the polymerizable compound. When the crosslinking agent is used with a range of 0.01-20 parts by weight, it is possible to increase the conversion into a gel polymer so that gel polymer electrolyte properties may be ensured, and to prevent a pre-gellation reaction so that the wettability of an electrode with an electrolyte may be improved.

Meanwhile, if necessary, the second electrolyte may further include a lithium salt and/or a polymerizable compound.

After that, crosslinking of the polymerizable compound is carried out (S4). According to the present disclosure, the crosslinking may be carried out by disposing the preliminary battery in a predetermined heating device and allowing it to stand therein for a predetermined time. In the method for manufacturing a lithium secondary battery according to the present disclosure, step (S4) may be carried out at a temperature of 50-80°C. According to a particular embodiment of the present disclosure, step (S4) may be carried out at a temperature of 60-70°C. Meanwhile, step (S4) may be carried out for 30 minutes to 24 hours. According to a particular embodiment of the present disclosure, step (S4) may be carried out at about 65°C for 5 hours or less.

In the gel polymer electrolyte battery obtained by the method as described above, the gel polymer electrolyte is uniformly distributed in the electrode assembly, and thus may show uniform electrochemical properties throughout the whole battery. FIG. 4 is a schematic view illustrating a battery whose inner part is wetted with a gel polymer electrolyte 203.

Meanwhile, according to an embodiment of the present disclosure, the first electrolyte and/or the second electrolyte may further include supplementary additives capable of forming a more stable ion conductive coating film on the surface of an electrode, if necessary, in order to prevent decomposition and a collapse of the negative electrode under a high-output environment, or to improve low-temperature high-rate discharge characteristics, high-temperature stability, overcharge-preventing effect, battery swelling-inhibiting effect at high temperature, or the like, when preparing the gel polymer electrolyte.

Particularly, typical examples of such supplementary additives may include at least one first additive selected from sultone-based compounds, sulfite-based compounds, sulfone-based compounds, sulfate-based compounds, halogen-substituted carbonate-based compounds, nitrile-based compounds, cyclic carbonate-based compounds, phosphate-based compounds, borate-based compounds or lithium salt-based compounds or a combination of two or more thereof.

The sultone-based compounds may include at least one compound selected from 1,3-propane sultone (PS), 1,4-butane sulfone, ethene sultone, 1,3-propene sultone (PRS), 1,4-butene sultone or 1-methyl-1,3-propene sultone or a combination of two or more thereof, and may be used in an amount of 0.3-5 wt%, particularly 1-5 wt%, based on the total weight of the composition for a gel polymer electrolyte. When the content of the sulfone-based compounds is larger than 5 wt% in the composition for a gel polymer electrolyte, an excessively thick coating film may be formed on the surface of an electrode, resulting in an increase in resistance and degradation of output. Also, in this case, resistance may be increased due to such an excessive amount of additives in the composition for a gel polymer electrolyte to cause degradation of output characteristics.

The sulfite-based compounds may include ethylene sulfite, methyl ethylene sulfite, ethyl ethylene sulfite, 4,5-dimethyl ethylene sulfite, 4,5-diethyl ethylene sulfite, propylene sulfite, 4,5-dimethyl propylene sulfite, 4,5-diethyl propylene sulfite, 4,6-dimetyl propylene sulfite, 4,6-diethyl propylene sulfite or 1,3-butylene glycol sulfite, or a combination of two or more of thereof, and may be used in an amount of 3 wt% or less, based on the total weight of the composition for a gel polymer electrolyte.

The sulfone-based compounds may include divinyl sulfone, dimethyl sulfone, diethyl sulfone, methyl ethyl sulfone or methyl vinyl sulfone or a combination of two or more thereof, and may be used in an amount of 3 wt% or less, based on the total weight of the composition for a gel polymer electrolyte.

The sulfate-based compounds may include ethylene sulfate (Esa), trimethylene sulfate (TMS), or methyl trimethylene sulfate (MTMS), and may be used in an amount of 3 wt% or less, based on the total weight of the composition for a gel polymer electrolyte.

In addition, the halogen-substituted carbonate-based compounds may include fluoroethylene carbonate (FEC), and may be used in an amount of 5 wt% or less, based on the total weight of the composition for a gel polymer electrolyte. When the content of the halogen-substituted carbonate-based compounds is larger than 5 wt%, cell swelling quality may be degraded.

Further, the nitrile-based compounds may include succinonitrile, adiponitrile (Adn), acetonitrile, propionitrile, butyronitrile, veleronitrile, caprylonitrile, heptane nitrile, cyclopentane carbonitrile, cyclohexane carbonitrile, 2-fluorobenzonitrile, 4-fluorobenzonitrile, difluorobenzonitrile, trifluorobenzonitrile, phenylacetonitrile, 2-fluorophenylacetonitrile or 4-fluorophenylacetonitrile or a combination of two or more thereof.

The cyclic carbonate-based compounds may include vinylene carbonate (VC) or vinylethylene carbonate, and may be used in an amount of 3 wt% or less, based on the total weight of the composition for a gel polymer electrolyte. When the content of the cyclic carbonate-based compounds is larger than 3 wt%, cell swelling quality may be degraded.

The phosphate-based compounds may include lithium difluoro(bisoxalato)phosphate, lithium difluorophosphate (LiPO₂F₂), tetramethyl trimethylsilyl phosphate, trimethylsilyl phosphite, tris(2,2,2-trifluoroethyl) phosphate or tris(trifluoroethyl) phosphite or a combination of two or more thereof, and may be used in an amount of 3 wt% or less, based on the total weight of the composition for a gel polymer electrolyte.

The borate-based compounds may include lithium oxalyl difluoroborate, and may be used in an amount of 3 wt% or less, based on the total weight of the composition for a gel polymer electrolyte.

The lithium salt-based compounds may include compounds different from the lithium salt contained in the non-aqueous electrolyte, and particularly, at least one compound selected from LiPO₂F₂, LiODFB, LiBOB (lithium bisoxalatoborate (LiB(C₂O₄)₂) or LiBF₄, or a combination of two or more thereof and may be used in an amount of 3 wt% or less, based on the total weight of the composition for a gel polymer electrolyte.

Further, two or more of the supplementary additives may be used in combination, and the content of the supplementary additives may be 20 wt% or less, particularly 0.1-10 wt%, based on the total weight of the composition for a gel polymer electrolyte. When the content of the supplementary additives is smaller than 0.01 wt%, it is not possible to obtain sufficient effects of improving the low-temperature output, high-temperature storage characteristics and high-temperature life characteristics of a battery. When the content of the supplementary additives is larger than 20 wt%, excessive side reactions may occur in the composition for a gel polymer electrolyte during the charge/discharge of a battery due to an excessive amount of additives. Particularly, when the additives are added in an excessive amount, they cannot be decomposed sufficiently at high temperature, resulting in formation of unreacted materials or precipitate in the electrolyte at room temperature or precipitation thereof. In this case, side-reactions may occur to cause degradation of the life or resistance characteristics of a secondary battery.

As described above, in the method for manufacturing a secondary battery according to the present disclosure, the inner part of a battery is uniformly wetted with a liquid electrolyte, and then the electrolyte is gelled. Therefore, it is possible to obtain a secondary battery having a uniform distribution of the gel polymer electrolyte in the battery through uniform wetting with the gel polymer electrolyte. In addition, as compared to a battery using a liquid electrolyte, the gel polymer electrolyte secondary battery obtained by the method for manufacturing a secondary battery according to the present disclosure causes no leakage of the electrolyte, has excellent heat resistance and safety and high durability, and shows uniform electrochemical properties throughout the whole battery through the uniform distribution of the electrolyte inside of the battery.

According to the present disclosure, the secondary battery may be a lithium secondary battery, preferably. Non-limiting examples of the lithium secondary battery include a lithium metal secondary battery, a lithium-ion secondary battery, a lithium polymer secondary battery, a lithium-ion polymer secondary battery, or the like.

### MODE FOR DISCLOSURE

Examples will be described more fully hereinafter so that the present disclosure can be understood with ease. The following examples may, however, be embodied in many different forms and should not be construed as limited to the exemplary embodiments set forth therein. Rather, these exemplary embodiments are provided so that the present disclosure will be thorough and complete, and will fully convey the scope of the present disclosure to those skilled in the art.

### (1) Examples 1 and 2

### (Manufacture of Electrode Assembly)

First, 94 wt% of LiNi_{1/3}Co_{1/3}Mn_{1/3}O₂ (NCM) as a positive electrode active material, 3 wt% of carbon black as a conductive material and 3 wt% of polyvinylidene fluoride (PVDF) as a binder were added to N-methyl-2-pyrrolidone (NMP) as a solvent to obtain a positive electrode active material slurry (solid content: 50 wt%). The positive electrode active material slurry was applied to and dried on aluminum (Al) foil having a thickness of about 20 µm as a positive electrode current collector, followed by roll pressing, to obtain a positive electrode.

In addition, 96 wt% of carbon powder as a negative electrode active material, 3 wt% of PVDF as a binder and 1 wt% of carbon black as a conductive material were added to NMP as a solvent to obtain a negative electrode active material slurry (solid content: 80 wt%). The negative electrode active material slurry was applied to and dried on copper (Cu) foil having a thickness of 10 µm as a negative electrode current collector, followed by roll pressing, to obtain a negative electrode.

The positive electrode, the negative electrode and a separator including three layers of polypropylene/polyethylene/polypropylene (PP/PE/PP) were stacked alternately and successively to obtain a stacked electrode assembly including 20 sheets of positive electrodes.

### (Preparation of First Electrolyte)

First, LiPF₆ was dissolved in a non-aqueous organic solvent having a composition of ethylene carbonate (EC):ethyl methyl carbonate (EMC) = 30:70 (volume ratio) to 1.0 M, thereby preparing a non-aqueous electrolyte. Next, 3 wt% (Example 1) or 2 wt% (Example 2) of trimethylolpropane triacrylate as a polymerizable compound was added to the non-aqueous electrolyte to prepare a first electrolyte. The amount of the organic solvent in the first electrolyte was 70 wt% based on 100 wt% of the amount designed to be introduced.

### (Preparation of Second Electrolyte)

First, AIBN ( 2,2'-azobis(isobutyronitrile)) was added to an organic solvent having a composition of ethylene carbonate (EC):ethyl methyl carbonate (EMC) = 30:70 (volume ratio) in an amount of 0.02 wt% based on 100 wt% of the gel polymer electrolyte to prepare a second electrolyte. The amount of the organic solvent in the second electrolyte was 30 wt% based on 100 wt% of the amount designed to be introduced.

### (Manufacture of Lithium Secondary Battery)

The electrode assembly was inserted into a battery casing, and the first electrolyte was injected thereto. The first electrolyte was injected under a reduced pressure condition controlled to -70 kPa to -99 kPa. Next, pressurization was carried out. Then, the battery casing was sealed and allowed to stand at room temperature for 3 days. Then, the battery casing was partially opened and subjected to deaeration eight times for 5 minutes under a reduced pressure condition of -95 kPa. After that, the second electrolyte was injected, and the battery casing was sealed. The second electrolyte was injected under a reduced pressure condition controlled to -70 kPa to -99 kPa. Then, pressurization was carried out. After that, the battery was introduced to a heating chamber and allowed to stand therein for 5 hours. The heating chamber was maintained at 60-70°C. Then, the battery was removed from the chamber and allowed to stand at room temperature for 1 hour, thereby providing a battery.

### (2) Comparative Example 1

An electrode assembly was obtained in the same manner as Examples. The electrode assembly was introduced to a battery casing, and an electrolyte was injected thereto. The electrolyte was injected under a reduced pressure condition controlled to -70 kPa to -99 kPa. Next, pressurization was carried out. Herein, the electrolyte includes LiPF₆ at a concentration of 1.0 M in a non-aqueous organic solvent having a composition of ethylene carbonate (EC):ethyl methyl carbonate (EMC) = 30:70 (volume ratio). Then, the battery casing was sealed and allowed to stand at room temperature for 3 days. After that, the battery casing was partially opened and subjected to deaeration eight times for 5 minutes under a reduced pressure condition of -95 kPa. Then, the battery casing was sealed again.

### (3) Comparative Example 2

An electrode assembly was obtained in the same manner as Examples. Next, the electrode assembly was introduced to a battery casing, and a composition for a gel polymer electrolyte was injected thereto. The composition for a gel polymer electrolyte was injected under a reduced pressure condition controlled to -70 kPa to -99 kPa. Then, pressurization was carried out. The composition for a gel polymer electrolyte included LiPF₆ at a concentration of 1.0 M in a non-aqueous organic solvent having a composition of ethylene carbonate (EC):ethyl methyl carbonate (EMC) = 30:70 (volume ratio). In addition, the composition for a gel polymer electrolyte further included trimethylolpropane triacrylate as a polymerizable compound and AIBN. The polymerizable compound was added in an amount of 3 wt% based on 100 wt% of the composition for a gel polymer electrolyte, and AIBN was added in an amount of 0.02 wt% based on 100 wt% of the composition for a gel polymer electrolyte. The battery casing was sealed and allowed to stand at room temperature for 3 days. After that, the battery casing was partially opened and subjected to deaeration eight times for 5 minutes under a reduced pressure condition of -95 kPa. Then, the battery was introduced to a heating chamber and allowed to stand therein for 5 hours. The heating chamber was maintained at 60-70°C. Then, the battery was removed from the chamber and allowed to stand at room temperature for 1 hour, thereby providing a battery.

### (4) Comparative Example 3

An electrode assembly was obtained in the same manner as Examples.

### (Preparation of First Electrolyte)

First, LiPF₆ was dissolved in a non-aqueous organic solvent having a composition of ethylene carbonate (EC):ethyl methyl carbonate (EMC) = 30:70 (volume ratio) to 1.0 M, thereby preparing a non-aqueous electrolyte. The amount of the organic solvent in the first electrolyte was 70 wt% based on 100 wt% of the amount designed to be introduced.

### (Preparation of Second Electrolyte)

First, 5 wt% of trimethylolpropane triacrylate as a polymerizable compound and 0.02 wt% of AIBN, based on 100 wt% of the composition for a gel polymer electrolyte, were added to an organic solvent having a composition of ethylene carbonate (EC):ethyl methyl carbonate (EMC) = 30:70 (volume ratio) to prepare a second electrolyte. The amount of the organic solvent in the second electrolyte was 30 wt% based on 100 wt% of the amount designed to be introduced.

### (Manufacture of Lithium Secondary Battery)

The electrode assembly was inserted into a battery casing, and the first electrolyte was injected thereto. Next, the battery casing was sealed and allowed to stand at room temperature for 3 days. Then, the battery casing was partially opened and subjected to deaeration eight times for 5 minutes under a reduced pressure condition of -95 kPa. After that, the second electrolyte was injected, and the battery casing was sealed. After that, the battery was introduced to a heating chamber and allowed to stand therein for 5 hours. The heating chamber was maintained at 60-70°C. Then, the battery was removed from the chamber and allowed to stand at room temperature for 1 hour, thereby providing a battery. Each of the first electrolyte and the second electrolyte was injected under a reduced pressure condition controlled to -70 kPa to -99 kPa, and pressurization was carried out after the injection of each electrolyte. The battery according to each of Examples and Comparative Examples was designed to show a capacity of about 40 Ah.

**[Table 1]**

| | Ex. 1 | Ex. 2 | Comp. Ex. 1 | Comp. Ex. 2 | Comp. Ex. 3 |
|---|---|---|---|---|---|
| Resistance (mOhm) | 2.42 | 2.44 | 2.40 | 2.49 | 5.26 |
| Cell capacity (%) | 97.9 | 97.6 | 98.1 | 97.2 | 97.1 |
| Percentage (%) of actual capacity based on designed capacity of battery | | | | | |
| Leakage (g) | Less than 1.0 | 0 | 15.1 | Less than 1.0 | 0 |

As can be seen from the above results, the battery according to each of Examples 1 and 2 shows a better result in terms of resistance, as compared to the batteries according to Comparative Examples 2 and 3. The resistance characteristics of the battery according to each of Examples 1 and 2 can be accomplished to a level similar to the resistance characteristics of the liquid electrolyte battery according to Comparative Example 1. Meanwhile, it can be seen that the battery according to Comparative Example 1 shows a larger amount of liquid electrolyte leakage as compared to Examples 1 and 2. The battery according to the present disclosure may be applied as a unit cell of a battery module for an electric power source of medium- to large-scale devices, such as electric vehicles. The battery module is obtained by combining and electrically connecting several to several tens of such unit cells and shows its performance through the accumulation of the performance of each unit cell. Therefore, the improvement of the performance of a unit cell is related directly with the improvement of the performance of the battery. When applying the battery obtained by the method according to the present disclosure to a battery module, it is possible to improve the performance of a medium- to large-scale device to which the battery is applied.

### Determination of Resistance

The resistance of the battery obtained according to each of Examples and Comparative Examples was determined through the result of electrochemical impedance spectroscopy by using the 1470E cell test system and Frequency response analyzer 1255B, available from Solaton, at a temperature of 25°C under the condition of a scan range of 100000-10000Hz.

### Percentage (%) of Actual Capacity Based on Designed Capacity of Battery

The gel polymer electrolyte battery according to each of Examples and Comparative Examples was charged to a voltage of 4.2 V at a constant current of 0.1 C and discharged to a voltage of 2.5 V at the same current. Herein, the resultant discharge capacity was input to the following Formula 1 to calculate the efficiency of actual discharge capacity based on the initial discharge capacity: Actual discharge capacity (%) = [Discharge capacity of the 1st cycle / Cell target discharge capacity] X 100

### Determination of Leakage

An opening having a size of about < 1.0 mm was formed in the battery casing of the gel polymer electrolyte battery according to each of Examples and Comparative Examples. Then, the battery was inclined at an angle of 1° to the ground surface (test table) and allowed to stand for 24 hours. Herein, the weight of the battery was measured before and after it was allowed to stand in such an inclined state.

### [Description of Drawing Numerals]

| | | | |
|---|---|---|---|
| 100: | Electrode Assembly | 201: | First electrolyte |
| 202: | Second electrolyte | 203: | Gel polymer electrolyte |
| A: | Direction of liquid-liquid diffusion | | |
| 101: | Positive electrode active material | | |
| 102: | Negative electrode active material | | |

## Claims

1. A method for manufacturing a secondary battery, comprising the steps of:
(S1) introducing an electrode assembly, and a first electrolyte containing an organic solvent and a polymerizable compound to a battery casing to obtain a preliminary battery;
(S2) allowing the preliminary battery to stand for a predetermined time;
(S3) injecting a second electrolyte containing an organic solvent and a crosslinking agent to the preliminary battery; and
(S4) allowing the resultant product of step (S3) at a temperature of 50-80°C for predetermined time, wherein the first electrolyte is free from a crosslinking agent.

2. The method for manufacturing a secondary battery according to claim 1, wherein the polymerizable compound comprises at least one selected from the group consisting of a polymerizable monomer, oligomer and copolymer.

3. The method for manufacturing a secondary battery according to claim 1, wherein the first electrolyte, the second electrolyte or both further comprise a lithium salt.

4. The method for manufacturing a secondary battery according to claim 1, wherein the second electrolyte further comprises a polymerizable compound.

5. The method for manufacturing a secondary battery according to claim 1, wherein step (S2) is carried out at room temperature.

6. The method for manufacturing a secondary battery according to claim 1, wherein step (S3) is carried out at a battery internal temperature of room temperature or ranging from room temperature to 100°C.

7. The method for manufacturing a secondary battery according to claim 1, wherein step (S3) is carried out under a vacuum condition or under a reduced pressure condition.

8. The method for manufacturing a secondary battery according to claim 1, wherein the crosslinking agent is at least one selected from an azo-based compound, a peroxide-based compound and a redox-based compound.

9. A method for manufacturing a secondary battery, comprising the steps of:
(S1) introducing an electrode assembly, and a first electrolyte containing an organic solvent and a polymerizable compound to a battery casing to obtain a preliminary battery;
(S2) allowing the preliminary battery to stand for a predetermined time;
(S3) injecting a second electrolyte containing an organic solvent and a crosslinking agent to the preliminary battery; and
(S4) allowing the resultant product of step (S3) at a temperature of 50-80°C for predetermined time.

10. The method for manufacturing a secondary battery according to claim 9, wherein at least one of the first electrolyte and the second electrolyte comprises a lithium salt.
